# EUROPÄISCHE PATENTSCHRIFT

(11) **EP 0 542 806 B1**
(45) Veröffentlichungstag und Bekanntmachung des Hinweises auf die Patenterteilung: **21.09.1994**
(21) Anmeldenummer: 91914051.7
(22) Anmeldetag: 31.07.1991
(51) Int. Cl.: C08J 11/24, C08L 75/00

(54) **VERFAHREN ZUR HERSTELLUNG POLYOLHALTIGER DISPERSIONEN UND DEREN VERWENDUNG**
PROCESS FOR PRODUCING POLYOL-CONTAINING DISPERSIONS AND THEIR USE
PROCEDE POUR LA FABRICATION DE DISPERSIONS CONTENANT DU POLYOL ET LEUR UTILISATION

(30) Priorität: 02.08.1990 DE 4024601
(43) Veröffentlichungstag der Anmeldung: 26.05.1993
(73) Patentinhaber: PEBRA GmbH Paul Braun, 73704 Esslingen (DE)
(72) Erfinder: BAUER, Gunter, D-7080 Aalen 15 (DE)
(74) Vertreter: Merkle, Gebhard
(86) Internationale Anmeldenummer: DE9100622
(87) Internationale Veröffentlichungsnummer: WO9202576

(56) Entgegenhaltungen:
- DE-A- 2 516 863
- DE-B- 2 557 172
- DE-C- 3 702 495

## Beschreibung

Die Erfindung betrifft ein Verfahren zur Herstellung polyolhaltiger Dispersionen durch Alkoholyse von Polyurethanharnstoffabfällen sowie die Verwendung der Dispersionen zur Herstellung neuer Polyurethanharnstoffe.

Es ist bereits bekannt, daß Polyurethane (PUR) und Polyharnstoffe (PH), insbesondere Schaumstoffe, durch alkoholytischen Abbau in homogene polyolhaltige Flüssigkeiten überführbar sind, die sich direkt zur Herstellung von PUR-Hartschaumstoffen eignen. Auf diesem Gebiet sind eine Reihe verschiedener Ausführungsformen bekannt geworden, wobei folgende Schriften beispielhaft aufgeführt sind:
DE-OS 25 16 863, US-PS 3 109 824, US-PS 3 404 103, DE-OS 25 57 172, DE-PS 27 38 572 oder DE-PS 37 02 495
Die bekannten Verfahren haben gemeinsam, daß die Alkoholyse mit einen erheblichen Überschuß an Diolen bzw. Polyolen durchgeführt wird, um die Polyurethane so weit abzubauen, daß homogene Polyolgemische entstehen, deren Viskosität nieder genug ist, um sie direkt oder in homogenen Gemischen mit kurzkettigen Polyolen erneut zur Herstellung von harten Polyurethanen zu verwenden. Den Produkten aus diesen Verfahren ist daher auch ein hohes Hydroxyläquivalent gemeinsam, das deren Anwendung auf die Herstellung harter Polyurethane begrenzt. Die Verfahren unterscheiden sich im wesentlichen durch spezielle Reaktionsbedingungen, Katalysatoren und Verfahrenstechniken.

Es ist bisher nicht gelungen, aus Polyurethanen und Polyharnstoffen durch alkoholytischen Abbau Produkte zu gewinnen, die sich hinsichtlich ihrer Viskositäten und Hydroxyläquivalente zur Herstellung weicher bis halbharter Schaumstoffe eignen.

Ebenso ist es bisher nicht gelungen, aus Polyurethanharnstoffen durch alkoholytischen Abbau polyolhaltige Produkte zu gewinnen, die zur erneuten Herstellung von Polyurethanharnstoffen wiederverwendet werden können. Insbesondere ist bis jetzt kein praktizierbares Verfahren bekannt, um RIM (Reaction-Injection-Molding)- bzw. R-RIM (Reenforced-Reaction-Injection-Molding)-Teile auf Basis von Polyurethanharnstoffen, die in großem Umfang in der Kraftfahrzeugindustrie eingesetzt werden, zu wiederverwendbaren Produkten abzubauen.

Der Erfindung liegt daher die Aufgabe zugrunde, ein Verfahren zum Abbau von Polyurethanharnstoffabfällen zur Verfügung zu stellen, welches es ermöglicht, durch eine einfache Alkoholysereaktion wiederverwendbare, polyolhaltige Produkte zu erhalten, die sich insbesondere zur erneuten Herstellung von Polyurethanharnstoffen eignen.

Diese Aufgabe wird erfindungsgemäß gelöst durch ein Verfahren zur Herstellung polyolhaltiger Dispersionen durch Umsetzung von Polyurethanharnstoffabfällen mit mindestens einem linearen und/oder verzweigtkettigen Diol und/oder Polyol mit einer Molmasse von 50-1000 g/Mol in einem Gewichtsverhältnis von Polymerabfällen zu Diol und/oder Polyol von über 3:1, bei einer Temperatur von 150-250° C, gegebenenfalls in Gegenwart saurer oder basischer Katalysatoren und Dispergieren des Reaktionsproduktes in mindestens einem Primärpolyol mit einer Molmasse bis 6000 g/Mol.

Unter Primärpolyol sind Polyole bzw. Polyolabmischungen zu verstehen, die zur Herstellung von Polyurethanen und Polyurethanharnstoffen eingesetzt werden.

Es hat sich überraschenderweise gezeigt, daß Polyurethanharnstoffe mittels dem erfindungsgemäßen Verfahren unter Einsatz geringer Diol- und/oder Polyolmengen zu viskosen Produkten abbaubar sind, die in beliebigem Verhältnis ohne besondere Krafteinwirkung auch in hochmolekularen Polyolen (Primärpolyolen) dispergierbar sind, wobei die so erhaltenen Dispersionen bei relativ niedrigen Viskositäten eine hohe Stabilität aufweisen.

Das andersartige Verhalten der Polyurethanharnstoffe gegenüber Polyurethanen zeigt sich während des Abbauprozesses dadurch, daß bei den Polyurethanharnstoffen keine zweiphasigen Substanzgemische und auch keine homogenen Produkte entstehen, sondern milchig trübe Massen, die jedoch weder in diesem Zustand noch beim Verdünnen mit Primärpolyolen ihren dispersen Charakter verlieren.

Dieser unerwartete Verlauf der Alkoholysereaktion, der nur bei der Akoholyse von Polyurethanharnstoffprodukten auftritt, ist im allgemeinen unabhängig von der Art des zur Alkoholyse verwendeten Diols oder Polyols, tritt jedoch nur dann auf, wenn das Verhältnis Polymer zu Di- und/oder Polyol in Gegensatz zu den bei der Alkoholyse von Polyurethanen bisher üblichen Mengenverhältnissen von bis zu etwa 3 : 1 zugunsten des Polymer je nach Art des eingesetzten Di- oder Polyols auf größer als 3 : 1 verändert wird.

Vorzugsweise beträgt beim erfindungsgemäßen Verfahren das Gewichtsverhältnis von Polymerabfällen zu Diol und/oder Polyol über 5 : 1. Erstaunlicherweise tritt auch bei noch größeren Verhältnissen von Polymer zu Diol und/oder Polyol, beispielsweise von über 6 : 1 bis 10 : 1 und darüber keine wesentliche Veränderung des stabilen dispersen Zustandes ein, so daß auch die hierbei erhaltenen hochviskosen Reaktionsprodukte mit beliebigen Primärpolyolen, auch hochmolekularen, verdünnbar sind, ohne daß eine wesentliche Zunahme der Viskosität der Primärpolyole zu verzeichnen ist.

Aus diesem Verhalten kann gefolgert werden, daß die Alkoholyseprodukte im statu nascendi durch selbststabilisierende Effekte feinteilige Dispersionen bilden, die so stabil sind, daß sie überraschenderweise auch beim Vermischen mit verschiedensten Polyolen nicht koagulieren oder in Phasen getrennt werden.

Nach dem erfindungsgemäßen Verfahren können alle Abfallmaterialien und Produktionsstände auf der Basis von Urethan- oder Harnstoff-Misch- und Copolymeren eingesetzt werden, die in der Regel durch Umsetzung von Gemischen aus Polyether- und/oder Polyesterpolyolen sowie Diaminen und Di-oder Polyisocyanaten hergestellt werden. Bevorzugt kann das erfindungsgemäße Allkoholyseverfahren auf Polymere, hergestellt aus aromatischen Diaminen, wie Diethyltoluylendiamin (DETDA), in Kombination mit hochmolekularen Polyetherpolyolen mit Molmassen von menreren Tausend g/Mol, auf der einen Seite, und aromatischen Di- und Polyisocyanaten auf der Basis Methylendiphenyldiisocyanat auf der anderen Seite, angewendet werden. Dabei wird die Alkohylse von weiteren Zusätzen und Modifizierungsmitteln nicht beeinflußt.

Ein wesentlicher Vorteil des erfindungsgemäßen Verfahrens besteht darin, daß RIM- und R-RIM-Teile praktisch rückstandslos abgebaut und in niederviskose Produkte mit geringem Hydroxylgruppenäquivalent überführt werden können. Hierbei können die RIM- oder R-RIM-Teile beliebig lackiert sein und Füllstoffe oder Verstärkungsstoffe enthalten. Das erfindungsgemäße Verfahren eignet sich insbesondere für glasfaserverstärkte (R-RIM)-Teile, da sich überraschenderweise gezeigt hat, daß kurze Glasfasern nahezu unverändert aus der Reaktion hervorgehen und über längere Zeiträume stabil in der erhaltenen Dispersion verteilt bleiben. Dieser unerwartete und anwendungstechnisch besonders wertvolle Effekt tritt dahingegen nicht auf, wenn Glasfasern in üblichen Polyolen mit ähnlichen Viskositäten dispergiert werden; hier setzen sich die Glasfasern in einer kompakten Schicht am Gefäßboden ab, was den Transport und die Lagerung des glasfasergefüllten Flüssigprodukts verfahrenstechnisch stark erschwert. Der Stabilisierungseffekt des beim erfindungsgemäßen Verfahren erhaltenen Alkoholyseproduktes hinsichtlich der Glasfaserverteilung ist nicht geklärt. Es wird angenommen, daß die dispergierten Teilchen aus dem Alkoholyseprodukt ein Absetzen der kurzen Glasfasern verhindern. Das erfindungsgemäße Verfahren ist damit von besonderer Bedeutung für die Alkoholyse von RIM-Ausschußteilen bzw. Altmaterialien. Mittels dem erfindungsgemäßen Verfahren ist es somit zum ersten Mal gelungen, derartige Abfälle durch Alkoholyse praktisch rückstandslos abzubauen und für den ursprünglichen Anwendungszweck wiederzuverwenden, indem sie beispielsweise der RIM- und R-RIM-Produktion zurückgeführt werden. Dies war, wie bereits eingangs erwähnt, mit den bisherigen Alkoholyseverfahren entweder aufgrund der hohen Hydroxyläquivalente oder der Heterogenität der Alkoholyseprodukte nicht möglich. Die Bedeutung des erfindungsgemäßen Verfahrens für Industrie und Volkswirtschaft ist somit beträchtlich, da bisher für derartige Abfälle keine Wiederverwendung möglich war und damit hochwertige und energieintensive Materialien als Abfall entsorgt werden mußten.

Für die Umsetzung nach dem erfindungsgemäßen Verfahren werden bevorzugt niedermolekulare aliphatische Diole mit bis zu 20 Kohlenstoffatomen eingesetzt. Beispiele hierfür sind Ethylenglykol, Diethylenglykol, Triethylenglykol, Tetraethylenglykol, Oligoethyylenglykole, Propylenglykol, Dipropylenglykol, Tripropylenglykol, Oligopropylenglykol, Butandiole, Dibutylenglykole, Pentandiole, 3-Methylpentandiol-1,5, Neopentylglykol, Hexandiole oder Oktandiole. Auch Gemische dieser Diole untereinander und mit mehrwertigen Alkoholen oder höhermolekularen Polyolen sind geeignet. Es hat sich gezeigt, daß beim erfindungsgemäßen Verfahren unabhängig vom verwendeten Diol oder Polyol Polyoldispersionen gebildet werden, vorausgesetzt die Diole und/oder Polyole werden in Gewichtsverhältnissen kleiner als 1 : 3, bevorzugt kleiner als 1 : 5, bezogen auf die Polyurethanharnstoffabfälle eingesetzt. Die Mengenverhältnisse können sogar 1 : 10 und darunter betragen, ohne daß dadurch der Charakter der Polyoldispersion prinzipiell verändert wird.

Beim erfindungsgemäßen Verfahren können die Diol- bzw. Polyolanteile so weit vermindert werden, wie dies viskositätsbedingt verfahrenstechnisch möglich ist, also Rühr- und Wärmeaustausch sowie die Auflösung der PUR-PH-Abfälle nicht behindert werden. Die Reaktionsgeschwindigkeit wird mit zunehmender Temperatur, ebenso durch basische und saure Katalysatoren, erhöht. Die erfindungsgemäße Umsetzung wird bevorzugt zwischen 180 und 230° C durchgeführt. Besonders wirksame Katalysatoren sind Alkalialkoxide, Hydroxide oder Carboxylate oder Lewis-Säuren, wie Titanate, Stannate oder Antimonate.

Es hat sich als vorteilhaft herausgestellt, die Reaktion kontinuierlich in beheizbaren Rührbehältern und/oder Schneckenmaschinen (Extruder) durchzuführen.

Die Umsetzung in einer ein- oder zweistufigen Rührkesselanlage bei Temperaturen von maximal 250° C und mittleren Aufenthaltszeiten von 1 bis 2 Stunden hat sich als besonders ideal erwiesen, obwohl bekanntlich bei kontinuierlichem Betrieb eines oder zwei hintereinander geschalteter Reaktionsgefäße theoretisch ein für chemische Reaktionen zu breites Aufenthaltsspektrum vorauszusehen ist. Nach dieser dem Verfahrenstechniker bekannten Tatsache war es nicht vorherzusehen, daß unter den gegebenen Reaktionsbedingungen den zweiten Reaktionsbehälter ein Produkt verläßt, das frei von unumgesetzten Bestandteilen dieselben physikalischen und chemischen Eigenschaften besitzt wie ein Produkt, welches unter denselben Bedingungen in diskontinuierlichen Batch-Betrieb gewonnen wurde.

Hervorzuheben ist, daß grob oder fein zerkleinerte RIM- oder R-RIM-Abfälle dem ersten Reaktionskessel zugeführt werden können, ohne daß eine Störung des kontinuierlichen Reaktionsablaufes oder Verschlechterung der Produkteigenschaften zu verzeichnen wäre.

Erfindungsgemäß können nach dieser Ausführungsform ebenso glasfaserverstärkte (R-RIM)-Produkte alkoholysiert werden. Es hat sich überraschenderweise gezeigt, daß durch die Anwendung dieses schonenden Rührkesselverfahrens die Glasfasern nahezu unbeschädigt und in disperser Form aus der Reaktion hervorgehen.

Die alkoholysierten Polymerabfälle, insbesondere RIM- und R-RIM-Abfälle, sind zwar in der Hitze fließfähig, müssen aber für Anwendungen bei üblichen Temperaturen mit Primärpolyolen verdünnt werden. Als Primärpolyole werden vorzugsweise Gemische auf der Basis von Polyether- und/oder Polyesterpolyolen eingesetzt. Es hat sich als vorteilhaft herausgestellt, das Primärpolyol unmittelbar nach Vervollständigung der Umsetzung zuzugeben und mit dem noch heißen Reaktionsprodukt zu vermischen, um die erwünschte Dispersion zu erhalten. Ebenso kann jedoch wenigstens ein Teil des Primärpolyols bereits während der Umsetzung vorliegen bzw. zugegeben werden. Die Mischfreundlichkeit und Stabilität der erfindungsgemäßen Alkoholysatdispersion erlaubt es, auch hochmolekulare Polyetherpolyole in der Hitze zuzumischen, ohne daß Koagulation oder Phasentrennung an bestimmten Stellen der Reaktionsstrecke oder beim Abkühlen des Produktes eintreten würden. Von besonderer Bedeutung ist bei dieser Vorgehensweise, daß im Falle der Umsetzung glasfasergefüllter Polymerabfälle nach Abkühlung und Beruhigung der Produktgemische kein Absetzen der Glasfasern in Form eines kompakten Bodensatzes festzustellen ist. Dies ist aufgrund gegenteiliger Erfahrungen mit glasfasergefüllten Polyolen vollkommen unerwartet und ist für die praktische Realisierung des Verfahrens bei R-RIM-Abfällen von großer Bedeutung.

Aufgrund des geringen Diol- bzw. Polyolanteils bei der Alkoholyse zeichnen sich die erfindungsgemäß hergestellten Alkoholyseprodukte durch niedrige Hydroxyläquivalente aus. Dies hat gegenüber den Alkoholysepolyolen - hergestellt nach den bisherigen Verfahren - den Vorteil, daß das Anwendungsspektrum wesentlich breiter ist. Neben harter. können weiche bis halbharte Polyurethanharnstoffe daraus hergestellt werden, je nach dem, mit welcher Art von Primärpolyol die Dispersion vermischt wird. Wird beispielsweise ein Alkoholysat mit einem langkettigen Triol mit einer Hydroxylzahl von ca. 30 mg KOH/g vermischt, ist diese stabile Polyoldispersion erneut zur Herstellung von R-RIM-Produkten geeignet. Der im Alkohlysat enthaltene freie Aminanteil wirkt hierbei von sich aus so stark beschleunigend auf die Reaktion mit Isocyanaten, daß in der Regel keine zusätzlichen Amine und Katalysatoren notwendig sind. Derartige Polyoldispersionen eignen sich daher hervorragend als Zusatz zu Primärpolyolen bei der RIM- und R-RIM-Technologie. Auf diese Weise gelingt es beispielsweise, Produktionsabfälle direkt dem Herstellungsprozess wieder zuzuführen, was bisher nicht möglich war und daher von beträchtlichem wirtschaftlicher. Nutzen und in bezug auf die Umweltbelastung von allgemeinem Vorteil ist.

Nicht nur die direkte Widerverwertung zu halbharten RIM-und R-RIM-Produkten ist mit den erfindungsgemäß erhaltenen Reaktionsprodukten möglich, sondern beispielsweise auch die Herstellung harter Polyurethanharnstoffe, insbesondere wenn die Alkoholysereaktion modifiziert wird. Wird dem Reaktionsdiol bzw. -polyol eine ungesättigte Carbonsäure bzw. deren Anhydrid, z.B. Acrylsäure zugesetzt, reagiert diese mit den Aminen und wird über die Doppelbindung in die Polyoldispersion eingebaut. Es entstehen dabei Polyoldispersionen, die sich gegenüber Isocyanat in bezug auf die Reaktivität neutral verhalten. Vermischt man diese z.B. mit kurzkettigen höherfunktionellen Polyolen, gelingt es mit diesen Polyoldispersionen mit üblichen Rezeptierungen harte Produkte, insbesondere Polyurethanhartschaumstoffe herzustellen. Diese Schaumstoffe besitzen hervorragende thermische und mechanische Eigenschaften. Auf diese Weise ist es möglich, z.B. RIM- oder R-RIM-Altteile wiederzuverwerten, um sie den verschiedensten Anwendungszwecken zuzuführen. Dadurch werden die Vermarktungschancen von Recyclingprodukten erheblich erweitert und verbessert.

Die nachfolgenden Beispiele erläutern die Erfindung.

Für alle Versuche wurden ausschüssige und gebrauchte Stoßfänger und Seitenteilverkleidungen von Automobilen verwendet, die nach dem R-RIM-Verfahren mit Isocyanaten und Polyol-Diamingemischen hergestellt wurden. Die lackierten und verunreinigten Teile wurden in einer Schneidmühle grob zerkleinert und in dieser Form zur Reaktion gebracht.

### Beispiel 1

In einem mit Rührer ausgestatteten 1 l-Dreihalskolben werden 40 g Diethylenglykol vorgelegt und auf 220° C aufgeheizt. Zerkleinerte lackierte R-RIM-Abfälle werden mit solcher Geschwindigkeit in den Kolben eindosiert, daß die Temperatur nicht unter 200° C abfällt und die Masse rührfähig bleibt. Nach Zugabe von insgesamt 360 g Abfällen wird bei 220° C weitergerührt. Nach einer Gesamtreaktionszeit von 2 h werden als Primärpolyol 360 g eines langkettigen Polyethertriols mit einer Molmasse von 5000 g/Mol in der Hitze eingerührt und abgekühlt. Es wird eine disperse, milchigtrübe Flüssigkeit mit einer Viskosität von 9,6 Pas bei 22° C und einer Hydroxylzahl von 95 mg KOH/g erhalten. Selbst nach mehrtägigem Stehen ist keine Phasentrennung und Bodensatz zu beobachten.

### Beispiel 2

70 g Butandiol, 1,0 g Kaliumhydroxid und 350 g R-RIM-Abfälle werden bei 200° C analog Beispiel 1 umgesetzt und nach beendeter Reaktion mit 210 g eines Polyethertriols mit einer Molmasse von 5000 g/Mol als Primärpolyol in der Hitze vermischt. Es wird eine stabile disperse Flüssigkeit mit einer Hydroxylzahl von 180 mg KOH/g und einer Viskosität von 10,6 Pas bei 22° C erhalten.

### Beispiel 3

60 g Dipropylenglykol und 80 g eines langkettigen Polyethertriols (Primärpolyol) werden im Kolben vorgelegt und bei 220° C 150 g R-RIM-Abfälle zudosiert. Bei langsamer Steigerung der Temperatur auf 250° C werden weitere 150 g Abfälle zugegeben. Nach einer Gesamtreaktionszeit von 1,5 Stunden wird mit 280 g eines langkettigen Polyethertriols (Primärpolyol) wie in Beispiel 1 gemischt. Es entsteht eine disperse, stabile Flüssigkeit mit einer Hydroxylzahl von 85 mg KOH/g und einer Viskosität von 13 Pas bei 22° C.

### Beispiel 4

Zu 70 g Diethylenglykol werden wie in Beispiel 1 bei 220° C innerhalb von 60 Minuten 350 g R-RIM-Abfälle und weiterhin 28 g Acrylsäure zudosiert. Nach einer weiteren Reaktionszeit von 45 min wird mit 300 g eines kurzkettigen Polyethertriols mit einer Hydroxylzahl von 300 mg KOH/g als Primärpolyol vermischt und abgekühlt. Es entsteht eine stabile Dispersion mit einer Hydroxylzahl von 20 mg KOH/g und einer Viskosität von 6 Pas.

Mit Hilfe folgender Rezeptur wurde unter Verwendung der so hergestellten Dispersion ein Schaumstoff mit guter Porenstruktur und Formstabilität hergestellt:
60 g Dispersion
2 g Silikontensid
0,3 g Dimethylcyclohexylamin
0,5 g Kaliumacetat
2 g H₂O
10 g Trichlorfluormethan

### Beispiel 5

Zur kontinuierlichen Versuchsdurchführung wird eine Apparatur verwendet, die aus zwei getrennt beheizbaren Rührreaktoren mit je 4 l Inhalt besteht.

Im Mengenverhältnis 7:1 werden R-RIM-Abfälle und Diethylenglykol in den ersten Reaktor kontinuierlich zudosiert. Der zweite Reaktor ist kommunizierend mit dem ersten verbunden, so daß über einen entsprechenden Auslauf das Flüssigkeitsniveau in beiden Reaktoren konstant gehalten wird. Bei einer Zugabemenge von 4 kg/ h verlassen den zweiten Reaktor ebenfalls ca. 4 kg/h flüssiges, 230°C heißes Reaktionsprodukt, das in einem Gefäß aufgefangen und kontinuierlich mit einem langkettigen Polyetherpolyol mit Hilfe eines Dispenserrührers im Verhältnis von 1 : 1 vermischt und abgekühlt wird. Das Produkt hat identische physikalische und chemische Eigenschaften wie ein diskontinuierlich hergestelltes Produkt nach Beispiel 1.

### Beispiel 6

Analog zu Beispiel 5 werden die in Beispiel 4 angegebenen Mengenverhältnisse von R-RIM-Abfällen, Diethylenglykol und Acrylsäure kontinuierlich so zudosiert, daß die Apparatur ca. 5 kg/h eines dispersen homogenen Produktes mit einer Temperatur von 220° C verlassen. Das heiße Produkt wird kontinuierlich mit 4 kg/h eines kurzkettigen Polyetherpolyols vermischt, wobei die Mischung nahezu dieselben Eigenschaften aufweist, wie ein analog zusammengesetztes Produkt gemäß Beispiel 5.

## Patentansprüche

1. Verfahren zur Herstellung polyolhaltiger Dispersionen durch Umsetzung von Polyurethanharnstoffabfällen mit mindestens einem linearen und/oder verzweigtkettigen Diol und/oder Polyol mit einer Molmasse von 50-1000 g/Mol in einem Gewichtsverhältnis von Polymerabfällen zu Diol und/oder Polyol von über 3:1, bei einer Temperatur von 150-250° C, gegebenenfalls in Gegenwart saurer oder basischer Katalysatoren und Dispergieren des Reaktionsproduktes in mindestens einem Primärpolyol mit einer Molmasse bis 6000 g/Mol.

2. Verfahren nach Anspruch 1, **dadurch gekennzeichnet**, daß das Gewichtsverhältnis von Polymerabfällen zu Diol und/oder Polyol über 5:1 beträgt.

3. Verfahren nach Anspruch 1 und/oder 2, **dadurch gekennzeichnet**, daß für die Umsetzung aliphatische Diole mit bis zu 20 Kohlenstoffatomen eingesetzt werden.

4. Verfahren nach mindestens einem der Ansprüche 1 bis 3, **dadurch gekennzeichnet**, daß Primärpolyole auf der Basis von Polyether- und/oder Polyesterpolyolen eingesetzt werden.

5. Verfahren nach mindestens einem der Ansprüche 1 bis 4, **dadurch gekennzeichnet**, daß das Dispergieren derart durchgeführt wird, daß unmittelbar nach Vervollständigung der Umsetzung das Primärpolyol zugegeben und mit dem noch heißen Reaktionsprodukt vermischt wird.

6. Verfahren nach mindestens einem der Ansprüche 1 bis 5, **dadurch gekennzeichnet**, daß wenigstens ein Teil des Primärpolyols bereits während der Umsetzung vorliegt bzw. zugegeben wird.

7. Verfahren nach mindestens einem der Ansprüche 1 bis 6, **dadurch gekennzeichnet**, daß Polyurethanharnstoffabfälle eingesetzt werden, die aufgebaut sind aus aromatischen Diisocyanaten und Polyetherpolyol/Diethyltoluylendiamin.

8. Verfahren nach mindestens einem der Ansprüche 1 bis 7, **dadurch gekennzeichnet**, daß RIM- und/oder R-RIM-Produktionsabfälle, gegebenenfalls mit Lackierung und Glasfaserfüllstoffen, eingesetzt werden.

9. Verfahren nach mindestens einem der Ansprüche 1 bis 8, **dadurch gekennzeichnet**, daß die Umsetzung in Gegenwart einer ungesättigten Carbonsäure bzw. deren Anhydrid durchgeführt wird.

10. Verfahren nach mindestens einem der Ansprüche 1 bis 9, **dadurch gekennzeichnet**, daß die Umsetzung kontinuierlich in einer ein- oder zweistufigen Rührkesselanlage oder in einem Extruder durchgeführt wird.

11. Verwendung der nach einem Verfahren gemäß den vorangehenden Ansprüchen hergestellten polyolhaltigen Dispersionen zur Herstellung von Polyurethanen bzw. Polyurethanharnstoffen.

## Claims

1. A process for preparing polyol-containing dispersions by reacting polyurethane-urea waste with at least one linear and/or branched-chain diol and/or polyol with a mol mass of 50-1000 g/mol in a ratio by weight of polymer waste to diol and/or polyol of greater than 3:1 at a temperature of 150-250°C, optionally in the presence of acid or basic catalysts, and by dispersing the reaction product in at least one primary polyol with a mol mass of up to 6000 g/mol.

2. A process according to claim 1, **characterized in** that the ratio by weight of polymer waste to diol and/or polyol is more than 5:1.

3. A process according to claim 1 and/or 2, **characterized in** that aliphatic diols with up to 20 carbon atoms are used for the reaction.

4. A process according to at least one of claims 1 to 3, **characterized in** that primary polyols based on polyether and/or polyester polyols are used.

5. A process according to at least one of claims 1 to 4, **characterized in** that the dispersion operation is carried out such that directly after the completion of the reaction primary polyol is added and mixed with the reaction product which is still in its hot state.

6. A process according to at least one of claims 1 to 5, **characterized in** that at least part of the primary polyol is already present or added during the reaction.

7. A process according to at least one of claims 1 to 6, **characterized in** that polyurethane-urea waste which is composed of aromatic diisocyanates and polyether polyol/diethyl toluylene diamine is used.

8. A process according to at least one of claims 1 to 7, **characterized in** that RIM- and/or R-RIM production waste, possibly with paint and glass-fiber fillers, is used.

9. A process according to at least one of claims 1 to 8, **characterized in** that the reaction is carried out in the presence of an unsaturated carboxylic acid or the anhydride thereof.

10. A process according to at least one of claims 1 to 9, **characterized in** that the reaction is continuously carried out in a single- or two-stage stirring vessel system or in an extruder.

11. Use of the polyol-containing dispersions made in a process according to the preceding claims for preparing polyurethanes or polyurethane-ureas.

## Revendications

1. Procédé de préparation de dispersions contenant des polyols par réaction de déchets de poly(uréthane-urée) avec au moins un diol linéaire et/ou ramifié et/ou un polyol de masse moléculaire 50-1000 g/mole, dans un rapport pondéral des déchets de polymère au diol et/ou polyol supérieur à 3:1, à une température de 150-250°C et éventuellement en présence de catalyseurs acides ou basiques, et dispersion du produit de la réaction dans au moins un polyol primaire dont la masse moléculaire peut aller jusqu'à 6000 g/mole.

2. Procédé selon la revendication 1, caractérisé en ce que le rapport pondéral des déchets de polymère au diol et/ou au polyol est supérieur à 5:1.

3. Procédé selon la (les) revendication(s) 1 et/ou 2, caractérisé en ce qu'on utilise, pour la réaction, des diols aliphatiques comportant jusqu'à 20 atomes de carbone.

4. Procédé selon au moins une des revendications 1 à 3, caractérisé en ce qu'on utilise des polyols primaires à base de polyéther-polyols et/ou de polyester-polyols.

5. Procédé selon au moins une des revendications 1 à 4, caractérisé en ce que la dispersion est réalisée de telle sorte que le polyol primaire est ajouté immédiatement après l'achèvement de la réaction et qu'il est mélangé avec le produit réactionnel encore chaud.

6. Procédé selon au moins une des revendications 1 à 5, caractérisé en ce qu'au moins une partie du polyol primaire est déjà présente ou ajoutée pendant la réaction.

7. Procédé selon au moins une des revendications 1 à 6, caractérisé en ce qu'on utilise des déchets de poly(uréthane-urée) qui se composent de diisocyanates aromatiques et de polyétherpolyol/diéthyltoluylènediamine.

8. Procédé selon au moins une des revendications 1 à 7, caractérisé en ce qu'on utilise des déchets de production par RIM et/ou R-RIM, éventuellement peints et chargés de fibres de verre.

9. Procédé selon au moins une des revendications 1 à 8, caractérisé en ce que la réaction est effectuée en présence d'un acide carboxylique insaturé ou de son anhydride.

10. Procédé selon au moins une des revendications 1 à 9, caractérisé en ce que la réaction est effectuée en continu dans une installation avec cuves à agitateur, à un ou deux étages, ou bien dans une extrudeuse.

11. Utilisation des dispersions contenant des polyols, préparées selon un procédé conforme aux revendications précédentes, pour la production de polyuréthanes ou poly(uréthane-urée).
